# EUROPEAN PATENT APPLICATION

(11) **EP 1 361 681 A1**
(43) Date of publication of application: **12.11.2003**
(21) Application number: 02790817.7
(22) Date of filing: 20.12.2002
(51) Int. Cl.: H04B 7/26

(54) **BASE STATION APPARATUS, COMMUNICATION TERMINAL APPARATUS, AND RADIO COMMUNICATION METHOD**

(30) Priority: 26.12.2001 JP 2001394810
(71) Applicant: MATSUSHITA ELECTRIC INDUSTRIAL CO., LTD., Kadoma-shi, Osaka 571-8501 (JP)
(72) Inventor: SHINOI, Kenichiro, Yokohama-shi, Kanagawa 233-0013 (JP)
(74) Representative: Grünecker, Kinkeldey, Stockmair & Schwanhäusser Anwaltssozietät
(86) International application number: JP0213339
(87) International publication number: WO03056724

(57) **Abstract**

In a base station apparatus, uplink Doppler shift estimation section 104 estimates the amount of Doppler shift of received signals, uplink filter coefficient determination section 108 determines a filter coefficient, control signal generation section 109 generates a control signal which indicates the filter coefficient, and the generated signal is transmitted to a communication terminal apparatus. In the communication terminal apparatus, control information extraction section 112 extracts a filter coefficient, and averaging section 113 performs averaging on the instantaneous power values measured at instantaneous power measurement section 111 for a time period based on the filter coefficient, and calculates the averaged value together with a noise power value. Wireless quality reporting section 114 transmits a signal indicating wireless quality derived from the averaged power value and the noise power value to the base station apparatus . In the base station apparatus, transmission scheme determination section 105 determines a modulation scheme and a coding rate based on the wireless quality. In this way, it is possible to increase the reliability of the wireless quality reported to the base station apparatus, thereby ensuring that an optimum modulation scheme is determined based on the wireless quality.

## Description

### FIELD OF THE INVENTION

The present invention relates to a base station apparatus, a communication terminal apparatus, and a wireless communication method.

### BACKGROUND ART

An adaptive modulation scheme is a scheme which changes modulation signals and data transmission rates in accordance with the conditions of a propagation path of a communication terminal apparatus. In such an adaptive modulation scheme, signals are transmitted at a high transmission rate for a communication terminal apparatus of which the conditions of a propagation path are good, whilst signals are transmitted at a low transmission rate for a communication terminal apparatus of which the conditions of a propagation path are poor, thereby improving the throughput of a wireless communication system as a whole.

In a wireless communication system which adopts a conventional adaptive modulation scheme, a communication terminal apparatus measures the quality of wireless transmission with a known signal which is transmitted from a base station apparatus, and the base station apparatus changes modulation signals in accordance with the result of the measurement.

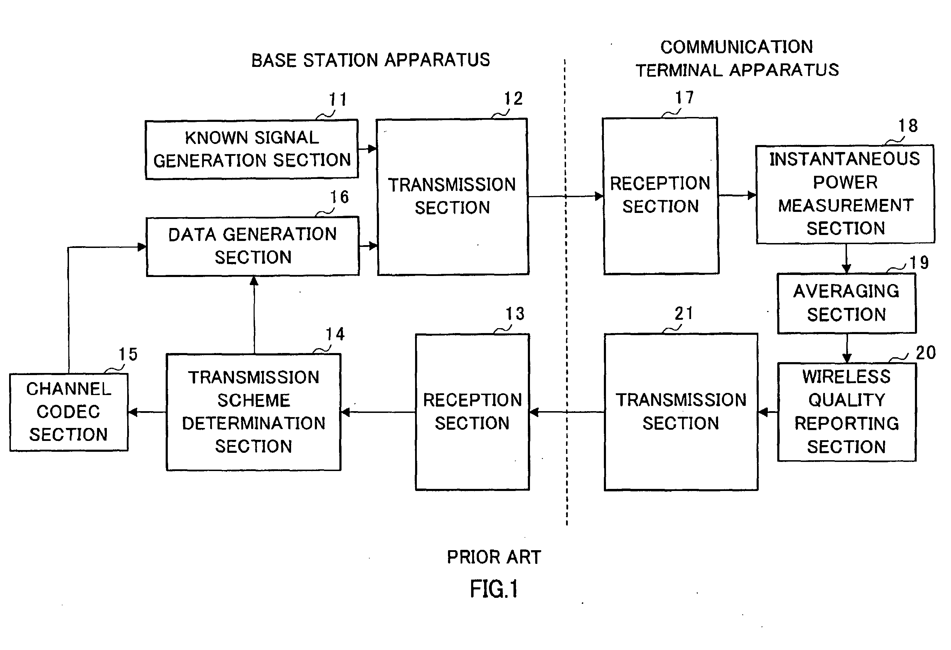

A wireless communication system which adopts a conventional adaptive modulation signal scheme is explained here with reference to FIG. 1. FIG. 1 is a block diagram illustrating a wireless communication system which adopts a conventional adaptive modulation signal scheme.

First of all, the configuration of a conventional base station apparatus is described. In FIG. 1, abase station apparatus comprises known signal generation section 11, transmission section 12, reception section 13, transmission scheme determination section 14, channel codec section 15, and data generation section 16.

Next, the configuration of a conventional communication terminal apparatus is described. In FIG. 1, a communication terminal apparatus comprises reception section 17, instantaneous power measurement section 18, averaging section 19, wireless quality reporting section 20, and transmission section 21.

Next, the operation of a wireless communication system which adopts a conventional adaptive modulation signal scheme is explained here with reference to FIG. 1.

First, at the base station apparatus, known signal generation section 11 generates a known signal, and transmits the generated known signal to the communication terminal apparatus via transmission section 12.

Next, at the communication terminal apparatus, instantaneous power measurement section 18 measures the instantaneous power values of the known signals received via reception section 17, and averaging section 19 performs averaging on the measured instantaneous power values to calculate an averaged power value and a noise power value. Wireless quality reporting section 20 transmits a control signal indicating wireless quality derived from the averaged power value of the known signals and the noise power value thereof to the base station apparatus via transmission section 21. Herein, a time period for the averaging of the instantaneous power values by averaging section 19 is predetermined, which is a fixed value of length for a mobile device.

Then, at the base station apparatus, transmission scheme determination section 14 determines a transmission scheme (modulation scheme and coding rate) based on the wireless quality indicated by the control signal received via reception section 13, channel codec section 15 performs the encoding of transmission data in the determined coding rate, and data generation section 16 performs the modulation of the transmission data encoded in the determined modulation scheme to output the modulated transmission data for transmission to the communication terminal apparatus via transmission section 12.

As described above, according to a wireless communication -system which adopts a conventional adaptive modulation scheme, a base station apparatus judges the conditions of a propagation path based on the wireless quality indicated by a control signal received from a communication terminal apparatus, and signals are transmitted at a high transmission rate for a communication terminal apparatus of which the conditions of the propagation path are good, whilst signals are transmitted at a low transmission rate for a communication terminal apparatus of which the conditions of the propagation path are poor, thereby improving the throughput of the wireless communication system as a whole.

However, in a wireless communication system which adopts a conventional adaptive modulation scheme, a base station apparatus judges the conditions of a propagation path based on an averaged power value received from a communication terminal apparatus, where such an averaged power value comes from averaging for a fixed time period, and accordingly, there arises a problem that the communication apparatus fails to keep track of changes in the propagation path due to its moving speed, and so forth, which causes the base station apparatus, based on the reported wireless quality, to determine a transmission system which is not the best one for the communication terminal apparatus.

That is, when averaging is performed for a short time period, a communication terminal apparatus is able to keep track of changes in a propagation path during the time of slow-speed moving on a real-time basis, however, the communication terminal apparatus fails to absorb abrupt variations sufficiently in the propagation path due to fading during the time of fast-speed moving. On the other hand, when averaging is performed for a long time period, a communication terminal apparatus is able to absorb abrupt variations due to fading sufficiently during the time of fast-speedmoving, however, the communication terminal apparatus fails to keep track of changes in wireless quality during the time of slow-speed moving on a real-time basis.

### DESCRIPTION OF THE INVENTION

The object of the present invention is to provide such a base station apparatus, a communication terminal apparatus, and a wireless communication method as one which allows the communication terminal to perform averaging on power values in accordance with the conditions of a propagation path to enhance the reliability of a wireless quality value to be transmitted, and allows the base station apparatus to determine an optimum transmission scheme based on the reported value.

This object is achieved by judging the conditions of a propagation path of a communication terminal apparatus (a moving speed or a reception power fluctuation value) based on known signals received by the base station apparatus from the communication terminal apparatus or on known signals received by the communication terminal apparatus from the base station apparatus, and by controlling a time period for the averaging of power values which is performed at the communication terminal apparatus or by selecting an item to be reported, thereby increasing the reliability of a power value reported to the base station apparatus to ensure that an optimum transmission scheme is determined based on the power value.

### BRIEF DESCRIPTION OF THE DRAWINGS

FIG. 1 is a block diagram illustrating the configuration of a wireless communication system according to a conventional example;
FIG. 2 is a block diagram illustrating the configuration of a wireless communication system according to Embodiment 1 of the present invention;
FIG. 3 is a sequence diagram illustrating the operation of a wireless communication system according to Embodiment 1 of the present invention;
FIG. 4 is a block diagram illustrating the configuration of a wireless communication system according to Embodiment 2 of the present invention;
FIG. 5 is a block diagram illustrating the configuration of a wireless communication system according to Embodiment 3 of the present invention;
FIG. 6 is a block diagram illustrating the configuration of a wireless communication system according to Embodiment 4 of the present invention;
FIG. 7 is a block diagram illustrating the configuration of a wireless communication system according to Embodiment 5 of the present invention;
FIG. 8 is a block diagram illustrating the configuration of a wireless communication system according to Embodiment 6 of the present invention;
FIG. 9 is a block diagram illustrating the configuration of a wireless communication system according to Embodiment 7 of the present invention;
FIG. 10 is a block diagram illustrating the configuration of a wireless communication system according to Embodiment 8 of the present invention;
FIG. 11 is a block diagram illustrating the configuration of a wireless communication system according to Embodiment 9 of the present invention;
FIG. 12 is a block diagram illustrating the configuration of a wireless communication system according to Embodiment 10 of the present invention;
FIG. 13 is a block diagram illustrating the configuration of a wireless communication system according to Embodiment 11 of the present invention, and;
FIG. 14 is a block diagram illustrating the configuration of a wireless communication system according to Embodiment 12 of the present invention.

### BEST MODE FOR CARRYING OUT THE INVENTION

Embodiments of the present invention will be described below with reference to the accompanying drawings.

### (Embodiment 1)

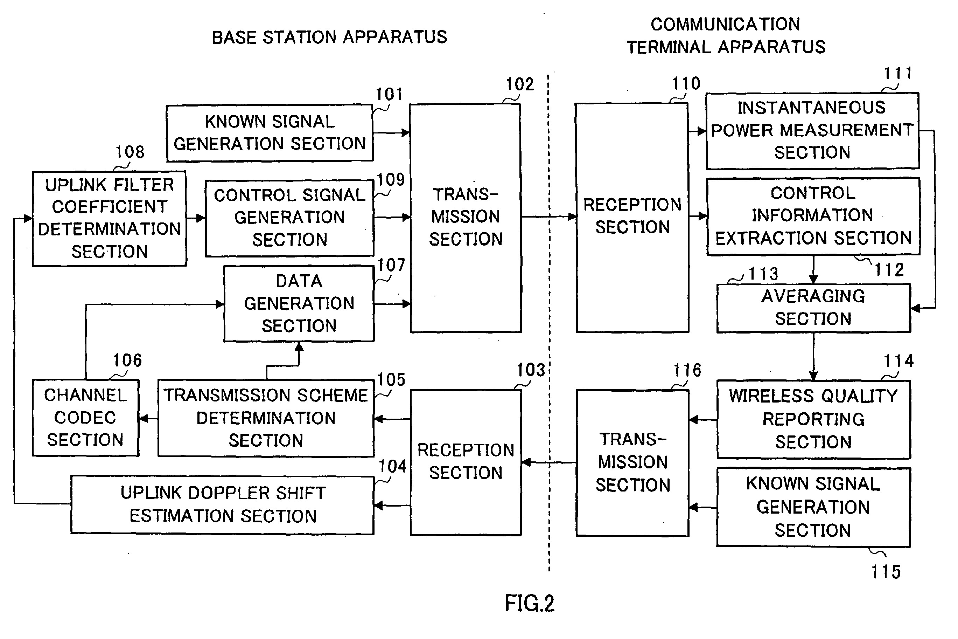

FIG. 2 is a block diagram illustrating the configuration of a wireless communication system according to Embodiment 1 of the present invention.

First of all, a base station apparatus according to the present invention will be described here with reference to FIG. 2. In FIG. 2, a base station apparatus comprises known signal generation section 101, transmission section 102, reception section 103, uplink Doppler shift estimation section 104, transmission scheme determination section 105, channel codec section 106, data generation section 107, uplink filter coefficient determination section 108, and control signal generation section 109.

Known signal generation section 101 generates a known signal (a reference signal) which is made known to a communication terminal apparatus, and transmission section 102 performs wireless processing on the known signal, a control signal, and other signals (transmission data) to transmit the processed signals to the communication terminal apparatus.

Reception section 103 receives a control signal which indicates a wireless quality value and a known signal (a pilot signal) transmitted from the communication terminal apparatus. Uplink Doppler shift estimation section 104 estimates the amount of Doppler shift of the known signal. Uplink filter coefficient determination section 108 determines a filter coefficient held in the communication terminal apparatus based on the amount of the Doppler shift. Control signal generation section 109 generates a control signal which indicates the filter coefficient.

Then, transmission scheme determination section 105 determines a transmission scheme (modulation scheme and coding rate) based on the wireless quality value indicated by the control signal. Channel codec section 106 performs the encoding of transmission data in the coding rate which is determined at transmission scheme determination section 105. Data generation section 107 performs the modulation of the transmission data encoded in the modulation scheme which is determined at transmission scheme determination section 105.

Next, a communication terminal apparatus according to the present invention will be described here with reference to FIG. 2. In FIG. 2, a communication terminal apparatus comprises reception section 110, instantaneous power measurement section 111, control information extraction section 112, averaging section 113, wireless quality reporting section 114, known signal generation section 115, and transmission section 116.

Reception section 110 receives a known signal and a control signal transmitted from a base station apparatus. Instantaneous power measurement section 111 measures the instantaneous power values of the known signals. Control information extraction section 112 modulates the control signal to extract a filter coefficient.

Averaging section 113 performs averaging on the instantaneous power values measured at instantaneous power measurement section 111 based on the filter coefficient extracted at control information extraction section 112 while measuring the total noise power. Wireless quality reporting section 114 generates a control signal which indicates wireless quality from the averaged power value and the noise power value of the averaged known signal. Known signal generation section 115 generates a known signal. Transmission section 116 performs wireless processing on the known signal and the control signal to transmit the processed signals to the base station apparatus.

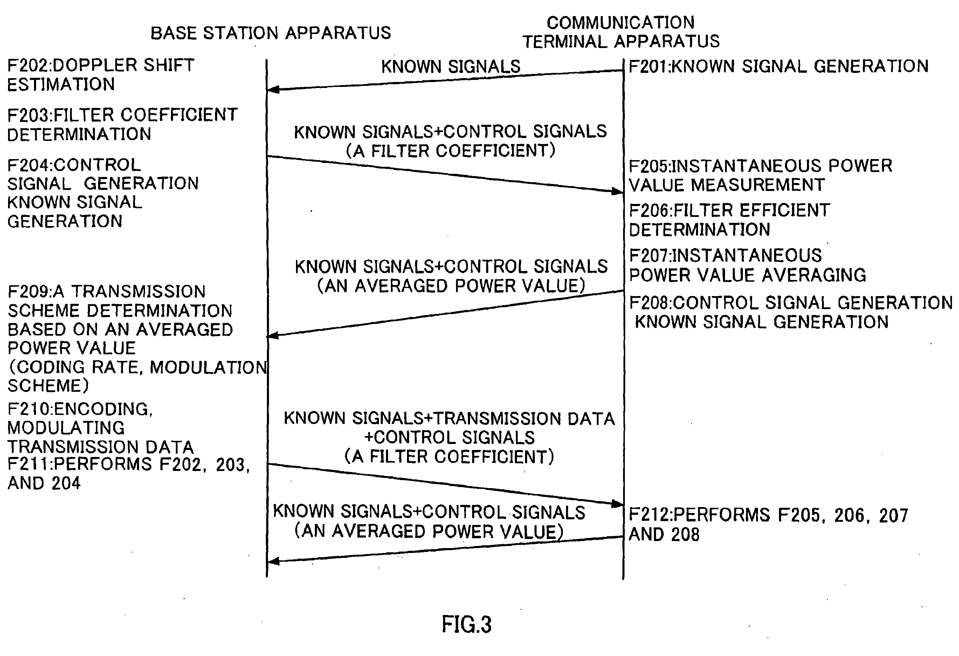

Here, the operation of a wireless communication system having the above-described configurations is described with reference to sequence diagrams of FIG. 2 and FIG. 3. First, at a communication terminal apparatus, known signal generation section 115 generates a known signal, and transmission section 116 transmits the generated known signal to a base station apparatus (F201).

Next, at the base station apparatus, uplink Doppler shift estimation section 104 detects the spectrum of the known signal received via reception section 103 to estimate the amount of Doppler shift corresponding to a multiplexed wave. When detecting the spectrum, detection is made by providing a plurality of band-pass filters which allow signals to pass within a specific frequency band only, and by measuring the output levels of reception signals which have passed through the band-pass filters or by performing Fourier transform processing on such reception signals (F202).

Uplink filter coefficient determination section 108 determines a filter coefficient based on the amount of Doppler shift estimated at uplink Doppler shift estimation section 104. When determining the filter coefficient, the communication terminal apparatus is judged to be moving at a high speed in a case where the amount of the Doppler shift is large, and in such a case, the determination is made in such a way that a long time period is taken for averaging at averaging section 113 in the communication terminal apparatus. On the other hand, the communication terminal apparatus is judged to be moving at a low speed in a case where the amount of the Doppler shift is small, and in such a case, the determination is made in such a way that a short time period is taken for averaging at averaging section 113 in the communication terminal apparatus (F203).

Herein, the reason why a long time period is taken for averaging at averaging section 113 in the communication terminal apparatus, in a case where the communication terminal apparatus is moving at a high speed, is to eliminate the effects of fading during the fast-speed moving, and so forth.

Control signal generation section 109 generates a control signal which indicates the filter coefficient determined at uplink filter coefficient determination section 108, and the generated control signal is transmitted to the communication terminal apparatus via transmission section 102 (F204).

Next, at the communication terminal apparatus, instantaneous power measurement section 111 measures the instantaneous power values of the known signal in a case where the signal received via reception section 110 is the known signal (F205), whilst control information extraction section 112 modulates the control signal to extract a filter coefficient in a case where the signal received via reception section 110 is the control signal (F206).

Averaging section 113 performs averaging on the instantaneous power values measured at instantaneous power measurement section 111 for a time period based on the filter coefficient extracted at control information extraction section 112 (F207), and calculates the averaged value together with a noise power. Wireless quality reporting section 114 transmits a control signal indicating wireless quality derived from the averaged power value of the known signal which is averaged at averaging section 113 and the noise power value thereof to the base station apparatus via transmission section 116 (F208).

Next, at the base station apparatus, transmission scheme determination section 105 determines a transmission scheme (modulation scheme and coding rate) based on the wireless quality value indicated by the control signal received via reception section 103 . When determining the modulation scheme and the coding rate, it is judged that the conditions of the propagation path are good in a case where the averaged power value is large, and in such a case, the coding rate is raised or a modulation scheme such as 16 QAM (Quadrature Amplitude Modulation), 64 QAM, and so forth is used in the same coding rate to increase the transmission rate. On the other hand, it is judged that the conditions of the propagation path are poor in a case where the wireless quality value is small, and in such a case, the coding rate is lowered or a modulation scheme such as QPSK, 8PSK, and so forth is used in the same coding rate to decrease the transmission rate (F209).

Channel codec section 106 performs the encoding of the transmission data in the coding rate determined at transmission scheme determination section 105, and data generation section 107 performs the modulation on the encoded transmission data in the modulation scheme determined at transmission scheme determination section 105, and then the modulated data is transmitted to the communication terminal apparatus via transmission section 102 (F210).

Thereafter, the base station apparatus performs the processing of F202, F203, and F204 (F211), whilst the communication terminal apparatus performs the processing of F205, F206, F207, and F208 (F212).

As described above, according to Embodiment 1, it is possible for a base station apparatus to judge the moving speed of a communication terminal apparatus based on the Doppler shift amount of signals received by the base station apparatus from the communication terminal apparatus, and so it is further possible to increase the reliability of a wireless quality value and to ensure that a transmission scheme determined based on the reported wireless quality value is the best one by controlling a time period for averaging at the communication terminal apparatus in such a way that a long time period is taken for averaging the instantaneous power values of known signals in a case where the moving speed of the communication terminal apparatus is fast whilst a short time period is taken for averaging the instantaneous power values of the known signals in a case where the moving speed of the communication terminal apparatus is slow.

Though the sequence diagram in FIG. 3 illustrates a case where a known signal and a control signal or transmission data are transmitted in a single sequence, the same may be alternatively transmitted in separate sequences in an asynchronous manner.

### (Embodiment 2)

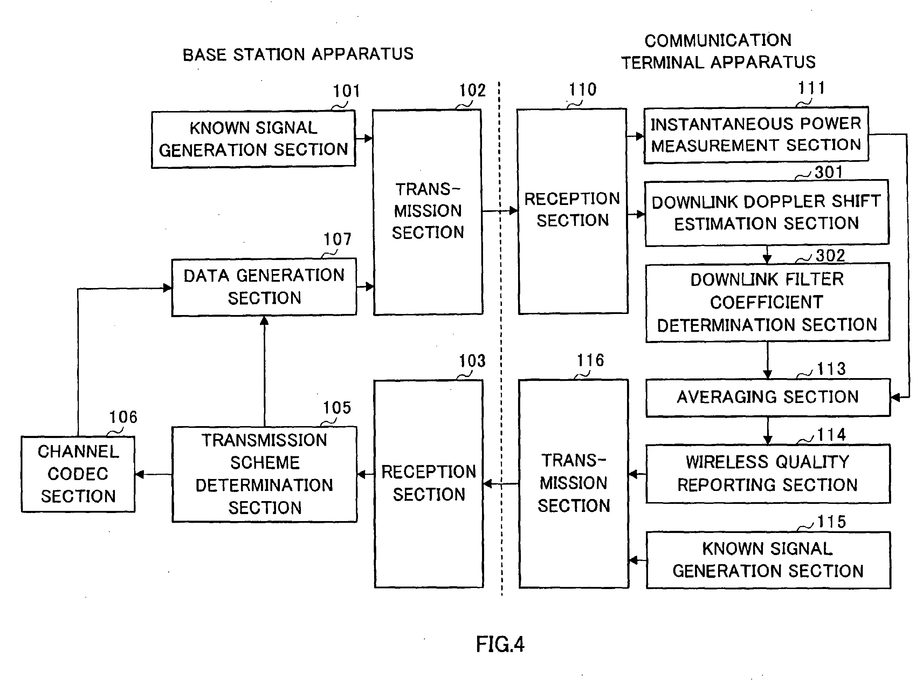

FIG. 4 is a block diagram illustrating the configuration of a wireless communication system according to Embodiment 2 of the present invention. In FIG. 4, the same reference numeral is assigned to any constituent element which is the same as or equivalent to a constituent element illustrated in FIG. 2, and its detailed description is omitted. Here, a description will focus on the part which is particularly related to this Embodiment 2.

As illustrated in FIG. 4, in this Embodiment 2, a system is provided with downlink Doppler shift estimation section 301 and downlink filter coefficient determination section 302 in place of uplink Doppler shift estimation section 104, uplink filter coefficient determination section 108, and control signal generation section 109 which are illustrated in FIG. 2.

In a communication terminal apparatus, downlink Doppler shift estimation section 301 estimates the amount of Doppler shift of received known signals, and downlink filter coefficient determination section 302 determines a filter coefficient based on the amount of the Doppler shift which is estimated at downlink Doppler shift estimation section 301.

Here, the operation of a wireless communication system having the above-described configuration is described with reference to FIG. 4. First of all, at a communication terminal apparatus, downlink Doppler shift estimation section 301 detects the spectrum of a known signal received via reception section 110 to estimate the amount of Doppler shift corresponding to a multiple wave. When detecting the spectrum, detection is made by providing a plurality of band-pass filters which allow signals to pass within a specific frequency band only, and by measuring the output level of reception signals which have passed the band-pass filters or by performing Fourier transform processing on such reception signals.

Downlink filter coefficient determination section 302 determines a filter coefficient based on the amount of the Doppler shift estimated at downlink Doppler shift estimation section 301. When determining the filter coefficient, the communication terminal apparatus is judged to be moving at a high speed in a case where the amount of the Doppler shift is large, and in such a case, the determination is made in such a way that a long time period is taken for averaging at averaging section 113. On the other hand, the communication terminal apparatus is judged to be moving at a low speed in a case where the amount of the Doppler shift is small, and in such a case, the determination is made in such a way that a short time period is taken for averaging at averaging section 113.

Averaging section 113 performs averaging on the instantaneous power values measured at instantaneous power measurement section 111 for a time period based on the filter coefficient which is determined at downlink filter coefficient determination section 302, and calculates a noise power, whilst wireless quality reporting section 114 transmits a control signal indicating wireless quality derived from the averaged power value which is averaged at averaging section 113 and the noise power to the base station apparatus via transmission section 116.

As described above, according to Embodiment 2, it is possible for a communication terminal apparatus to judge the moving speed of the communication terminal apparatus based on the Doppler shift amount of signals received by the communication terminal apparatus from a base station apparatus, and so it is further possible to increase the reliability of an averaged power value and to ensure that a transmission scheme determined by the base station apparatus based on the averaged power value is the best one by controlling a time period for averaging in such a way that a long time period is taken for averaging the instantaneous power values of known signals in a case where the moving speed of the communication terminal apparatus is fast whilst a short time period is taken for averaging the instantaneous power values of the known signals in a case where the moving speed of the communication terminal apparatus is slow.

In addition, because there is no need for a base station apparatus to transmit a control signal which contains a filter coefficient to a communication terminal apparatus, the throughput of a wireless communication system as a whole is improved in comparison with Embodiment 1.

### (Embodiment 3)

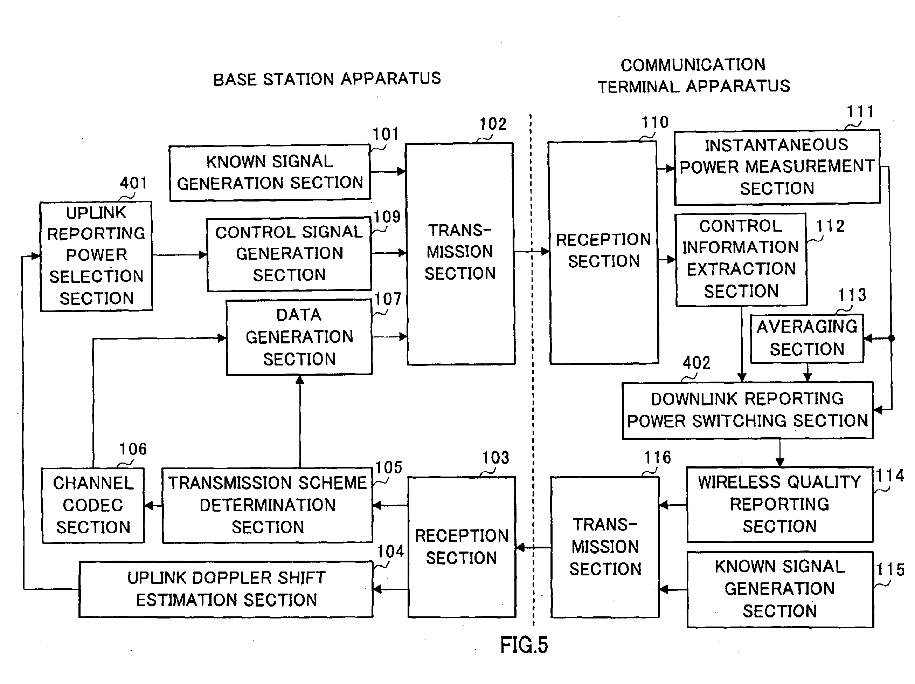

FIG. 5 is a block diagram illustrating the configuration of a wireless communication system according to Embodiment 3 of the present invention. In FIG. 5, the same reference numeral is assigned to any constituent element which is the same as or equivalent to a constituent element illustrated in FIG. 2, and its detailed description is omitted. Here, a description will focus on the part which is particularly related to this Embodiment 3.

As illustrated in FIG. 5, in this Embodiment 3, a system is provided with uplink reporting power selection section 401 and downlink reporting power switching section 402 in place of uplink filter coefficient determination section 108 which is illustrated in FIG. 2.

In a base station apparatus, based on the amount of Doppler shift estimated at Doppler shift estimation section 104, uplink reporting power selection section 401 selects a power value which is used for deriving a wireless quality value reported by a communication terminal apparatus.

In addition, in the communication terminal apparatus, based on the reported item extracted at control information extraction section 112, downlink reporting power switching section 402 selects either instantaneous power values measured at instantaneous power measurement section 111 or an averaged power value which is averaged at averaging section 113.

Here, the operation of a wireless communication system having the above-described configuration is described with reference to FIG. 5. First, at a base station apparatus, uplink Doppler shift estimation section 104 detects the spectrum of a known signal received via reception section 103 to estimate the amount of Doppler shift corresponding to a multiple wave. When detecting the spectrum, detection is made by providing a plurality of band-pass filters which allow signals to pass within a specific frequency band only, and by measuring the output level of reception signals which have passed the band-pass filters or by performing Fourier transform processing on such reception signals.

Uplink reporting power selection section 401 selects an item to be reported based on the amount of the Doppler shift estimated at uplink Doppler shift estimation section 104. When selecting an item to be reported, the communication terminal apparatus is judged to be moving at a high speed in a case where the amount of the Doppler shift is greater than a threshold value, and in such a case, the item reported from the communication terminal apparatus should be a wireless quality value which is based on the averaged power value of the known signal. On the other hand, the communication terminal apparatus is judged to be moving at a low speed in a case where the amount of the Doppler shift is lesser than a threshold value, and in such a case, the item reported from the communication terminal apparatus should be a wireless quality value which is based on the instantaneous power values of the known signal.

Control signal generation section 109 generates a control signal which indicates the item selected at uplink reporting power selection section 401, and the generated control signal is transmitted to the communication terminal apparatus via transmission section 102.

Next, at the communication terminal apparatus, instantaneous power measurement section 111 measures the instantaneous power values of the known signal in a case where the signal received via reception section 110 is the known signal, whilst control information extraction section 112 modulates the control signal to extract the item reported in a case where the signal received via reception section 110 is the control signal.

Averaging section 113 performs averaging on the instantaneous power values measured at instantaneous power measurement section 111. Based on the reported item extracted at control information extraction section 112, downlink reporting power switching section 402 selects either the instantaneous power values measured at instantaneous power measurement section 111 or the averaged power value which is averaged at averaging section 113. Wireless quality reporting section 114 transmits a control signal indicating the wireless quality value which is derived from either the instantaneous power values of the known signal or the averaged power value thereof, that is, either one which is selected at downlink reporting power switching section 402, and the noise power value thereof to the base station apparatus via transmission section 116.

As described above, according to Embodiment 3, it is possible for a base station apparatus to judge the moving speed of a communication terminal apparatus based on the Doppler shift amount of signals received by the base station apparatus from the communication terminal apparatus, and so it is further possible to ensure that a transmission scheme determined based on either instantaneous power values or an averaged power value is the best one by performing a control in such a way that a wireless quality value derived from the averaged power value is reported in a case where the moving speed of the communication terminal apparatus is fast whilst a wireless quality value derived from the instantaneous power values is reported in a case where the moving speed of the communication terminal apparatus is slow.

Alternatively, a base station apparatus may transmit the amount of Doppler shift to a communication terminal apparatus as a report item, where the communication terminal apparatus compares the Doppler shift amount with a threshold to determine which power value is used in deriving a wireless quality value which is reported back to the base station apparatus.

### (Embodiment 4)

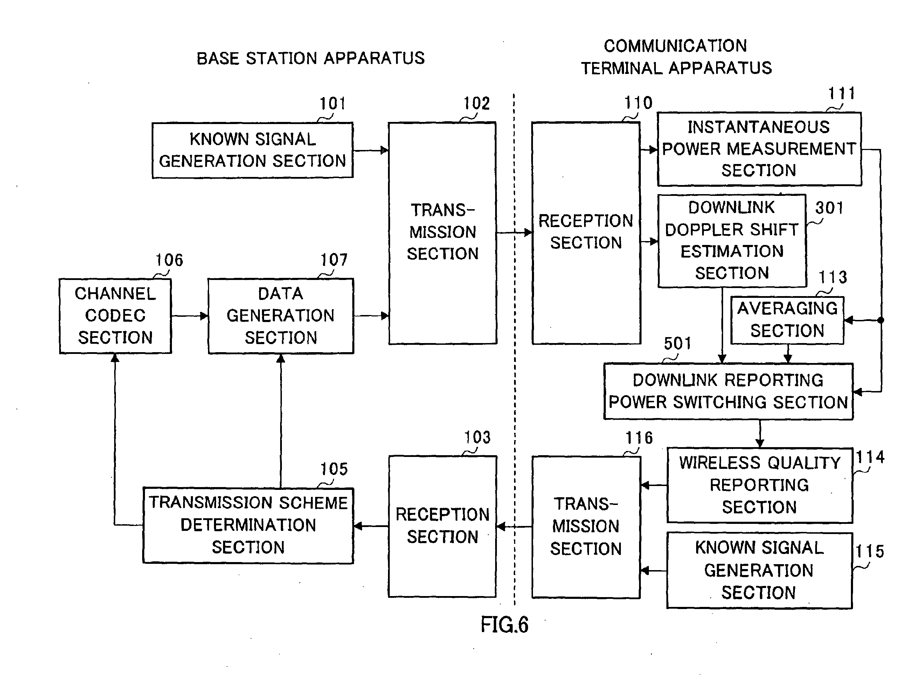

FIG. 6 is a block diagram illustrating the configuration of a wireless communication system according to Embodiment 4 of the present invention. In FIG. 6, the same reference numeral is assigned to any constituent element which is the same as or equivalent to a constituent element illustrated in FIG. 4, and its detailed description is omitted. Here, a description will focus on the part which is particularly related to this Embodiment 4.

As illustrated in FIG. 6, in this Embodiment 4, a system is provided with downlink reporting power switching section 501 in place of downlink filter coefficient determination section 302 which is illustrated in FIG. 4.

In a communication terminal apparatus, based on the Doppler shift amount estimated at downlink Doppler shift estimation section 301, downlink reporting power switching section 501 selects either instantaneous power values measured at instantaneous power measurement section 111 or an averaged power value which is averaged at averaging section 113 for using the selected power value(s) in deriving a wireless quality value.

Here, the operation of a wireless communication system having the above-described configuration is described with reference to FIG. 6. First of all, at a communication terminal apparatus, downlink Doppler shift estimation section 301 detects the spectrum of a known signal received via reception section 110 to estimate the amount of Doppler shift corresponding to a multiple wave. When detecting the spectrum, detection is made by providing a plurality of band-pass filters which allow signals to pass within a specific frequency band only, and by measuring the output level of reception signals which have passed the band-pass filters or by performing Fourier transform processing on such reception signals.

Downlink reporting power switching section 501 selects an item to be reported based on the Doppler shift amount estimated at downlink Doppler shift estimation section 301. When selecting an item to be reported, the communication terminal apparatus is judged to be moving at a high speed in a case where the amount of the Doppler shift is greater than a threshold value, and in such a case, the item reported should be the averaged power value of the known signal. On the other hand, the communication terminal apparatus is judged to be moving at a low speed in a case where the amount of the Doppler shift is lesser than a threshold value, and in such a case, the item reported should be the instantaneous power values of the known signal.

Averaging section 113 performs averaging on the instantaneous power values measured at instantaneous power measurement section 111. Wireless quality reporting section 114 transmits a control signal indicating the wireless quality which is derived from either the instantaneous power values of the known signal or the averaged power value thereof, that is, either one which is selected at downlink reporting power switching section 501, to the base station apparatus via transmission section 116.

As described above, according to Embodiment 4, it is possible for a communication terminal apparatus to judge the moving speed of the communication terminal apparatus based on the Doppler shift amount of known signals received by the communication terminal apparatus, and so it is further possible to ensure that a transmission scheme determined based on a wireless quality value received by a base station apparatus from the communication terminal apparatus is the best one by performing a control in such a way that the wireless quality value derived from the averaged power value is reported in a case where the moving speed of the communication terminal apparatus is fast whilst the wireless quality value derived from the instantaneous power values is reported in a case where the moving speed of the communication terminal apparatus is slow.

### (Embodiment 5)

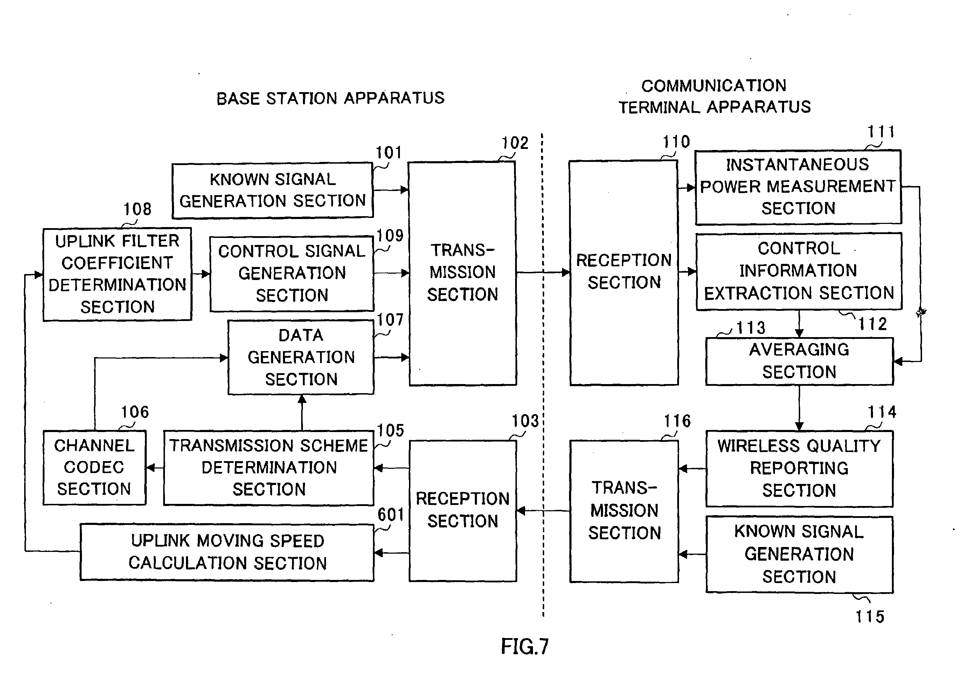

FIG. 7 is a block diagram illustrating the configuration of a wireless communication system according to Embodiment 5 of the present invention. In FIG. 7, the same reference numeral is assigned to any constituent element which is the same as or equivalent to a constituent element illustrated in FIG. 2, and its detailed description is omitted. Here, a description will focus on the part which is particularly related to this Embodiment 5.

As illustrated in FIG. 7, in this Embodiment 6, a system is provided with uplink moving speed calculation section 601 in place of uplink Doppler shift estimation section 104 which is illustrated in FIG. 2.

In a base station apparatus, uplink moving speed calculation section 601 calculates the moving speed of a communication terminal apparatus based on received signals each of which indicates location information.

Here, the operation of a wireless communication system having the above-described configuration is described with reference to FIG. 7. First of all, at a base station apparatus, uplink moving speed calculation section 601 calculates the amount of location shift per unit time based on received signals which are received periodically via reception section 103 where each received signal indicates location information, and calculates the moving speed of a communication terminal apparatus based on the calculated amount of location shift per unit time.

Uplink filter coefficient determination section 108 determines a filter coefficient based on the moving speed of the communication terminal apparatus which is calculated at uplink moving speed calculation section 601. When determining the filter coefficient, in a case where the communication terminal apparatus is judged to be moving at a high speed according to the calculated moving speed of the communication terminal apparatus itself, the determination is made in such a way that a long time period is taken for averaging at averaging section 113 in the communication terminal apparatus. On the other hand, in a case where the communication terminal apparatus is judged to be moving at a low speed according to the calculated moving speed of the communication terminal apparatus itself, the determination is made in such a way that a short time period is taken for averaging at averaging section 113 in the communication terminal apparatus.

As described above, according to Embodiment 5, it is possible for a base station apparatus to judge the moving speed of a communication terminal apparatus based on signals received by the base station apparatus from the communication terminal apparatus, and so it is further possible to increase the reliability of an averaged power value and to ensure that a transmission scheme determined based on the averaged power value is the best one by controlling a time period for averaging at the communication terminal apparatus in such a way that a long time period is taken for averaging the instantaneous power values of known signals in a case where the moving speed of the communication terminal apparatus is fast whilst a short time period is taken for averaging the instantaneous power values of the known signals in a case where the moving speed of the communication terminal apparatus is slow.

### (Embodiment 6)

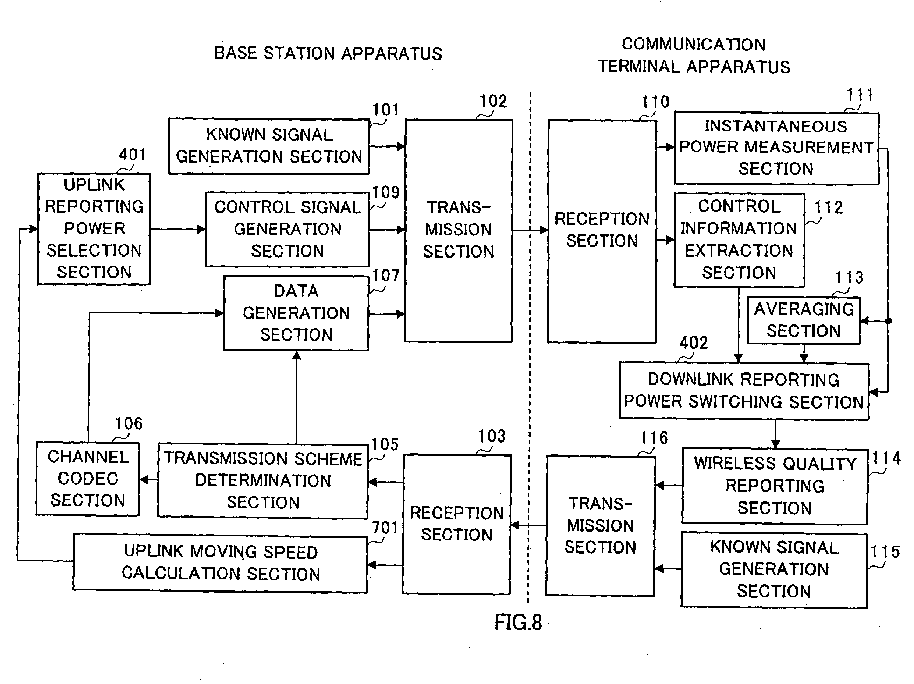

FIG. 8 is a block diagram illustrating the configuration of a wireless communication system according to Embodiment 6 of the present invention. In FIG. 8, the same reference numeral is assigned to any constituent element which is the same as or equivalent to a constituent element illustrated in FIG. 5, and its detailed description is omitted. Here, a description will focus on the part which is particularly related to this Embodiment 6.

As illustrated in FIG. 8, in this Embodiment 6, a system is provided with uplink moving speed calculation section 701 in place of uplink Doppler shift estimation section 104 which is illustrated in FIG. 5.

In a base station apparatus, uplink moving speed calculation section 701 calculates the moving speed of a communication terminal apparatus based on received signals each of which indicates location information.

Here, the operation of a wireless communication system having the above-described configuration is described with reference to FIG. 8. First of all, at a base station apparatus, uplinkmoving speed calculation section 701 calculates the amount of location shift per unit time based on received signals which are received periodically via reception section 103 where each received signal indicates location information, and calculates the moving speed of a communication terminal apparatus based on the calculated amount of location shift per unit time.

Uplink reporting power selection section 401 selects an item to be reported based on the moving speed of the communication terminal apparatus calculated at uplink moving speed calculation section 701. When selecting an item to be reported, the communication terminal apparatus is judged to be moving at a high speed in a case where the moving speed of the communication apparatus is higher than a threshold value, and in such a case, the item reported from the communication terminal apparatus should be a wireless quality value which is based on the averaged power value of the known signal. On the other hand, the communication terminal apparatus is judged to be moving at a low speed in a case where the moving speed of the communication apparatus is lower than a threshold value, and in such a case, the item reported from the communication terminal apparatus should be a wireless quality value which is based on the instantaneous power values of the known signal.

As described above, according to Embodiment 6, it is possible for a base station apparatus to judge the moving speed of a communication terminal apparatus based on signals received by the base station apparatus from the communication terminal apparatus, and so it is further possible to ensure that a transmission scheme determined based on a reported wireless quality value is the best one by performing a control in such a way that the wireless quality value derived from the averaged power value is reported in a case where the moving speed of the communication terminal apparatus is fast whilst the wireless quality value derived from the instantaneous power values is reported in a case where the moving speed of the communication terminal apparatus is slow.

Alternatively, a base station apparatus may transmit the moving speed to a communication terminal apparatus as a report item, where the communication terminal apparatus compares the moving speed with a threshold to determine which type of power value is used in deriving a wireless quality value which is reported back to the base station apparatus.

### (Embodiment 7)

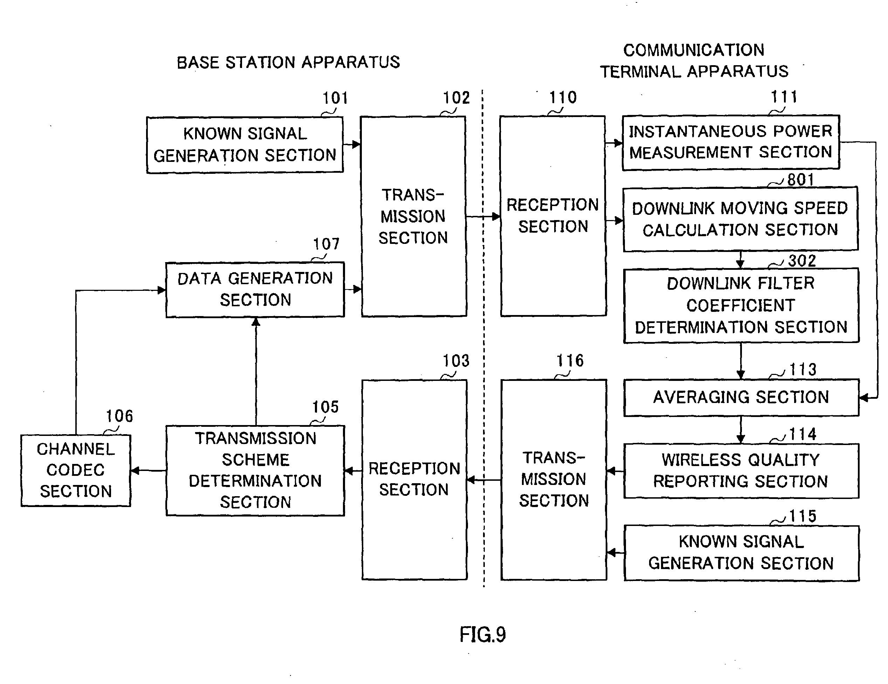

FIG. 9 is a block diagram illustrating the configuration of a wireless communication system according to Embodiment 7 of the present invention. In FIG. 9, the same reference numeral is assigned to any constituent element which is the same as or equivalent to a constituent element illustrated in FIG. 4, and its detailed description is omitted. Here, a description will focus on the part which is particularly related to this Embodiment 7.

As illustrated in FIG. 9, in this Embodiment 7, a system is provided with downlink moving speed calculation section 801 in place of downlink Doppler shift estimation section 301 which is illustrated in FIG. 4.

In a communication terminal apparatus, downlink moving speed calculation section 801 calculates the moving speed of the communication terminal apparatus itself based on received signals each of which indicates location information.

Here, the operation of a wireless communication system having the above-described configuration is described with reference to FIG. 9. First of all, at a communication terminal apparatus, downlink moving speed calculation section 801 calculates the amount of location shift per unit time based on received signals which are received via reception section 110 where each received signal indicates location information, and calculates the moving speed of the communication terminal apparatus itself based on the calculated amount of location shift per unit time.

Downlink filter coefficient determination section 302 determines a filter coefficient based on the moving speed of the communication terminal apparatus which is calculated at downlink moving speed calculation section 801. When determining the filter coefficient, in a case where the communication terminal apparatus is judged to be moving at a high speed, the determination is made in such a way that a long time period is taken for averaging at averaging section 113. On the other hand, in a case where the communication terminal apparatus is judged to be moving at a low speed, the determination is made in such a way that a short time period is taken for averaging at averaging section 113.

As described above, according to Embodiment 7, it is possible for a communication terminal apparatus to judge the moving speed of the communication terminal apparatus based on signals received by the communication terminal apparatus from a base station apparatus, and so it is further possible to increase the reliability of an averaged power value and to ensure that a transmission scheme determined by the base station apparatus based on a wireless quality report value which is reported based on the averaged power value is the best one by controlling a time period for averaging at the communication terminal apparatus in such a way that a long time period is taken for averaging the instantaneous power values of known signals in a case where the moving speed of the communication terminal apparatus is fast whilst a short time period is taken for averaging the instantaneous power values of the known signals in a case where the moving speed of the communication terminal apparatus is slow.

### (Embodiment 8)

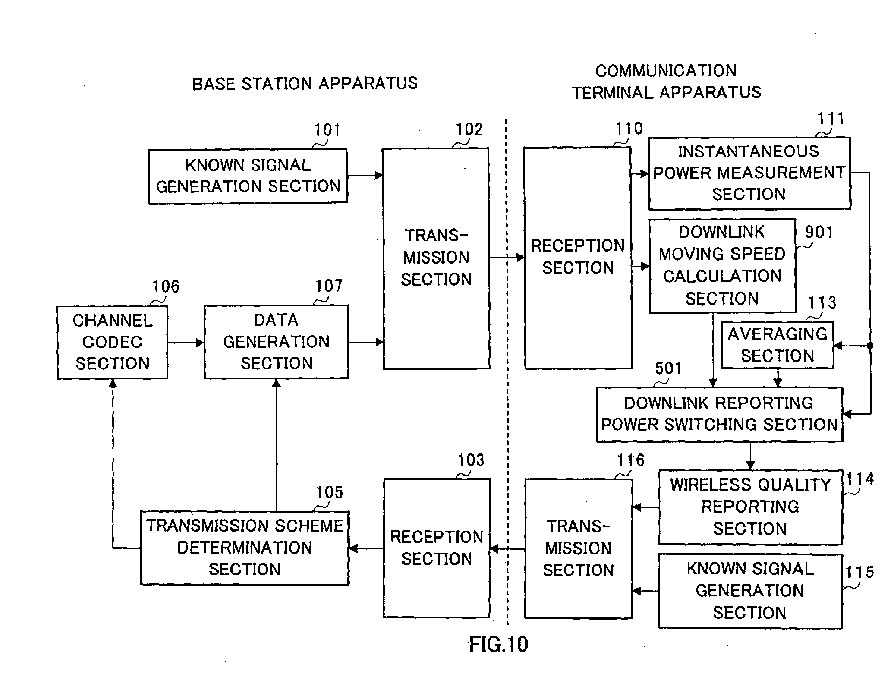

FIG. 10 is a block diagram illustrating the configuration of a wireless communication system according to Embodiment 8 of the present invention. In FIG. 10, the same reference numeral is assigned to any constituent element which is the same as or equivalent to a constituent element illustrated in FIG. 6, and its detailed description is omitted. Here, a description will focus on the part which is particularly related to this Embodiment 8.

As illustrated in FIG. 10, in this Embodiment 8, a system is provided with downlink moving speed calculation section 901 in place of downlink Doppler shift estimation section 301 which is illustrated in FIG. 6.

In a communication terminal apparatus, downlink moving speed calculation section 901 calculates the moving speed of the communication terminal apparatus itself based on received signals each of which indicates location information.

Here, the operation of a wireless communication system having the above-described configuration is described with reference to FIG. 10. First of all, at a communication terminal apparatus, downlink moving speed calculation section 901 calculates the amount of location shift per unit time based on received signals which are received via reception section 110 where each received signal indicates location information, and calculates the moving speed of the communication terminal apparatus itself based on the calculated amount of location shift per unit time.

Based on the calculated moving speed of the communication terminal apparatus, downlink reporting power switching section 501 selects which type of power is used in deriving a wireless quality value to be reported. When selecting an item to be reported, in a case where the communication terminal apparatus is judged to be moving at a high speed, the report item should be based on the averaged power value of the known signal. On the other hand, in a case where the communication terminal apparatus is judged to be moving at a low speed, the report item should be a wireless quality value which is based on the instantaneous power values of the known signal.

As described above, according to Embodiment 8, it is possible for a communication terminal apparatus to judge the moving speed of the communication terminal apparatus based on known signals received by the communication terminal apparatus, and so it is further possible to ensure that a transmission scheme determined based on a wireless quality value received by a base station apparatus from the communication terminal apparatus is the best one by performing a control in such away that the wireless quality value based on the averaged power value is reported in a case where the moving speed of the communication terminal apparatus is fast whilst the wireless quality value based on the instantaneous power values is reported in a case where the moving speed of the communication terminal apparatus is slow.

### (Embodiment 9)

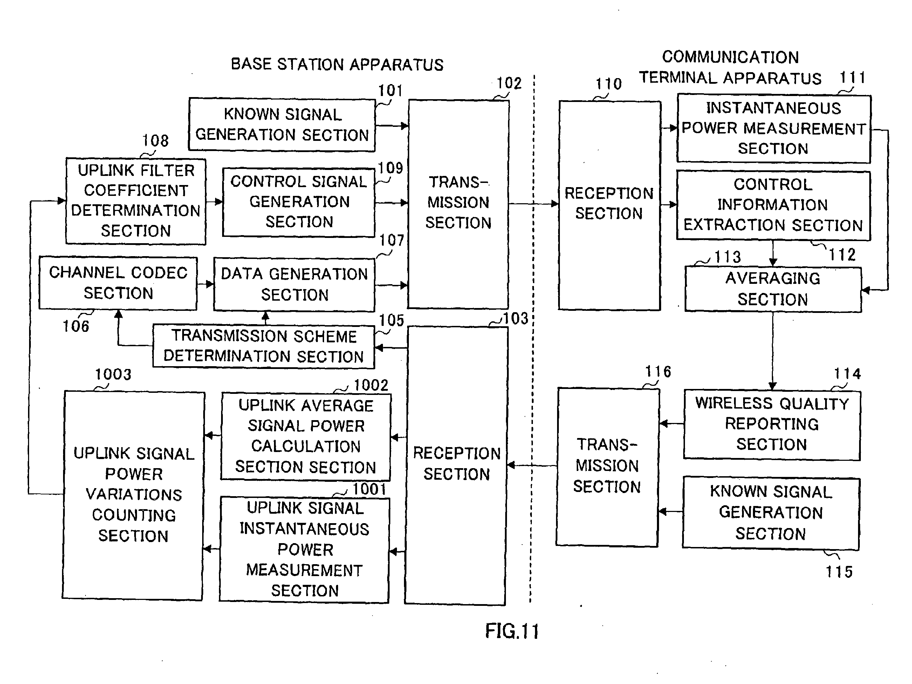

FIG. 11 is a block diagram illustrating the configuration of a wireless communication system according to Embodiment 9 of the present invention. In FIG. 11, the same reference numeral is assigned to any constituent element which is the same as or equivalent to a constituent element illustrated in FIG. 2, and its detailed description is omitted. Here, a description will focus on the part which is particularly related to this Embodiment 9.

As illustrated in FIG. 11, in this Embodiment 9, a system is provided with uplink signal instantaneous power measurement section 1001, uplink average signal power calculation section 1002, and uplink signal power variations counting section 1003 in place of uplink Doppler shift estimation section 104 which is illustrated in FIG. 2.

In a base station apparatus, uplink signal instantaneous power measurement section 1001 measures the instantaneous power values of signals received via reception section 103. Uplink average signal power calculation section 1002 averages the instantaneous power values measured for a set time period. Uplink signal power variations counting section 1003 counts the number of times of variations in the instantaneous power values.

Here, the operation of a wireless communication system having the above-described configuration is described with reference to FIG. 11. First of all, in a base station apparatus, uplink signal instantaneous power measurement section 1001 measures the instantaneous power values of signals received via reception section 103, whilst uplink average signal power calculation section 1002 averages the instantaneous power values measured for a set time period.

Uplink signal power variations counting section 1003 counts the number of times of variations in the instantaneous power values by comparing a reference value, which is set by adding a certain arbitrary value to the averaged value which is subjected to averaging at uplink average signal power calculation section 1002, with each of the instantaneous power values measured at uplink signal instantaneous power measurement section 1001. When counting the variations in the instantaneous power values, count is incremented each time when a certain instantaneous power value exceeds the reference value and then the next instantaneous power value falls short of the reference value or when a certain instantaneous power value falls short of the reference value and then the next instantaneous power value exceeds the reference value.

Uplink filter coefficient determination section 108 determines a filter coefficient based on the counter value which is counted at uplink signal power variations counting section 1003. When determining the filter coefficient, it is judged that the power variation values of the received signals are fluctuating heavily and so greater fading effects are expected in a case where the counter value is high in number, and in such a case, the determination is made in such a way that a long time period is taken for averaging at averaging section 113 in the communication terminal apparatus. On the other hand, it is judged that the power variation values of the received signals are running in a stable manner and so lesser fading effects are expected in a case where the counter value is low in number, and in such a case, the determination is made in such a way that a short time period is taken for averaging at averaging section 113 in the communication terminal apparatus.

As described above, according to Embodiment 9, it is possible for a base station apparatus to judge the power valuation value based on signals received by the base station apparatus from a communication terminal apparatus, and so it is further possible to increase the reliability of an averaged power value and to ensure that a transmission scheme determined based on the averaged power value is the best one by controlling a time period for averaging at the communication terminal apparatus in such a way that a short time period is taken for averaging the instantaneous power values in a case where the power variation value of the known signals is low in number whilst a long time period is taken for averaging the instantaneous power values in a case where the power variation value of the known signals is high in number.

### (Embodiment 10)

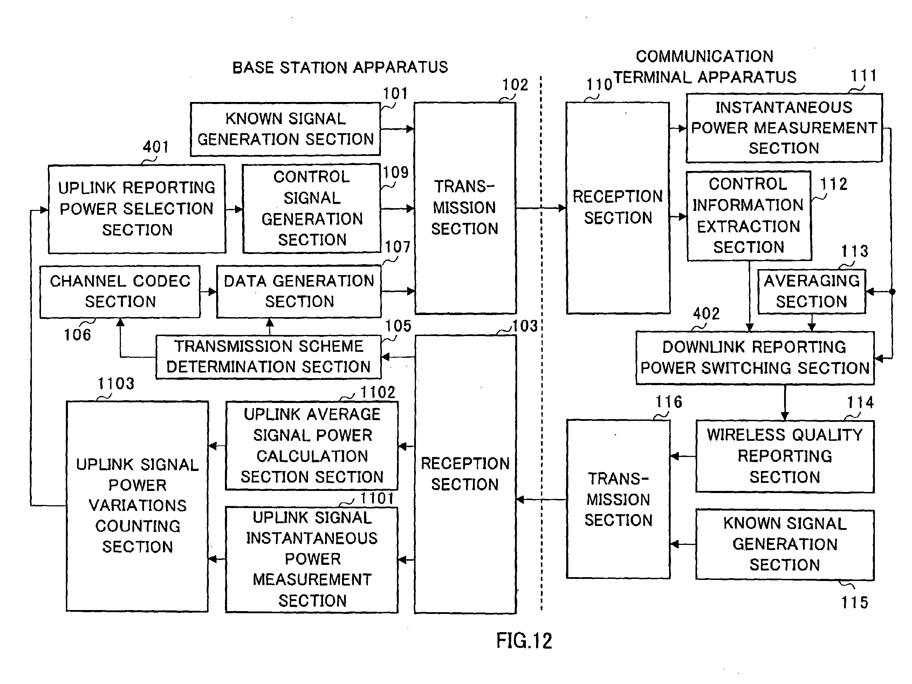

FIG. 12 is a block diagram illustrating the configuration of a wireless communication system according to Embodiment 10 of the present invention. In FIG. 12, the same reference numeral is assigned to any constituent element which is the same as or equivalent to a constituent element illustrated in FIG. 5, and its detailed description is omitted. Here, a description will focus on the part which is particularly related to this Embodiment 10.

As illustrated in FIG. 12, in this Embodiment 10, a system is provided with uplink signal instantaneous power measurement section 1101, uplink average signal power calculation section 1102, and uplink signal power variations counting section 1103 in place of uplink Doppler shift estimation section 104 which is illustrated in FIG. 5.

In a base station apparatus, uplink signal instantaneous power measurement section 1101 measures the instantaneous power values of signals received via reception section 103. Uplink average signal power calculation section 1102 averages the instantaneous power values measured for a set time period. Uplink signal power variations counting section 1103 counts the number of times of variations in the instantaneous power values.

Here, the operation of a wireless communication system having the above-described configuration is described with reference to FIG. 12. First, in a base station apparatus, uplink signal power variations counting section 1103 counts the number of times of variations in the instantaneous power values by comparing a reference value, which is set by adding a certain arbitrary value to the averaged value which is subjected to averaging at uplink average signal power calculation section 1102, with each of the instantaneous power values measured at uplink signal instantaneous power measurement section 1101. When counting the variations in the instantaneous power values, count is incremented each time when a certain instantaneous power value exceeds the reference value and then the next instantaneous power value falls short of the reference value or when a certain instantaneous power value falls short of the reference value and then the next instantaneous power value exceeds the reference value.

Uplink reporting power selection section 401 selects an item to be reported based on the counter value which is counted at uplink signal power variations counting section 1103. When selecting an item to be reported, it is judged that the power variation values of the received signals are fluctuating heavily and so greater fading effects are expected in a case where the counter value is higher in number than a threshold value, and in such a case, a power used in deriving a wireless quality value which is reported from the communication terminal apparatus should be the averaged power value of the known signals. On the other hand, it is judged that the power variation values of the received signals are running in a stable manner and so lesser fading effects are expected in a case where the counter value is lower in number than the threshold value, and in such a case, a wireless quality value which is based on the instantaneous power values of the known signals is reported from the communication terminal apparatus.

As described above, according to Embodiment 10, it is possible for a base station apparatus to judge the power valuation value based on signals received by a base station apparatus from the communication terminal apparatus, and so it is further possible to ensure that a transmission scheme determined based on a reported wireless quality value is the best one by performing a control in such a way that the reporting of the wireless quality value is performed based on the averaged power value in a case where the power variation value is high in number whilst the reporting of the wireless quality value is performed based on the instantaneous power values in a case where the power variation value is low in number.

Alternatively, a base station apparatus may transmit the counter value to a communication terminal apparatus as a report item, where the communication terminal apparatus compares the counter value with a threshold to determine which power value is used in deriving a wireless quality value which is reported back to the base station apparatus.

### (Embodiment 11)

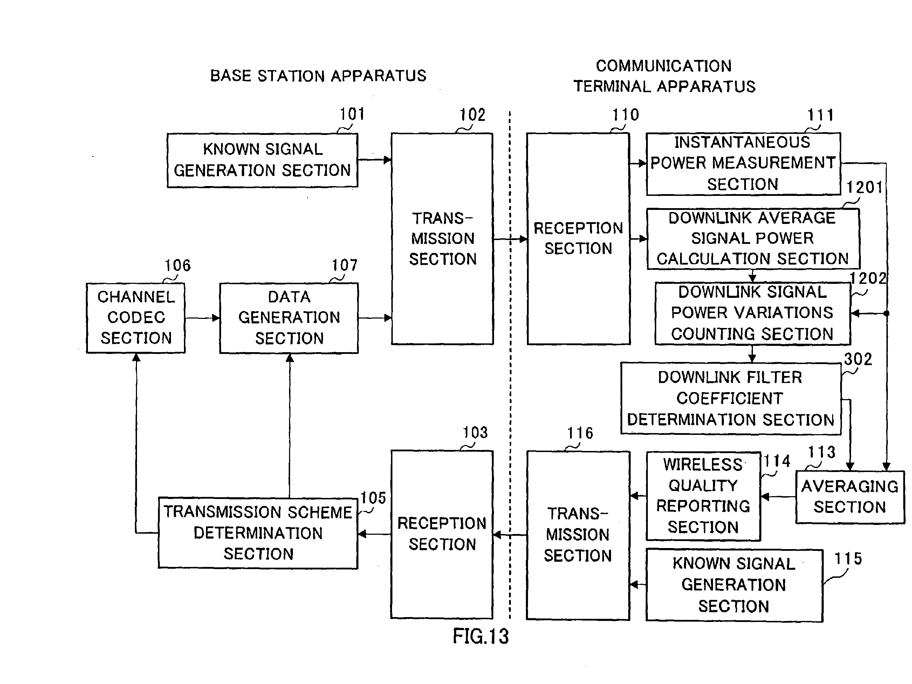

FIG. 13 is a block diagram illustrating the configuration of a wireless communication system according to Embodiment 11 of the present invention. In FIG. 13, the same reference numeral is assigned to any constituent element which is the same as or equivalent to a constituent element illustrated in FIG. 4, and its detailed description is omitted. Here, a description will focus on the part which is particularly related to this Embodiment 11.

As illustrated in FIG. 13, in this Embodiment 11, a system is provided with downlink average signal power calculation section 1201 and downlink signal power variations counting section 1202 in place of downlink Doppler shift estimation section 301 which is illustrated in FIG. 4.

In a communication terminal apparatus, downlink average signal power calculation section 1201 averages instantaneous power values measured for a set time period whilst downlink signal power variations counting section 1202 counts the number of times of variations in the instantaneous power values.

Here, the operation of a wireless communication system having the above-described configuration is described with reference to FIG. 13. First of all, in a communication terminal apparatus, instantaneous power measurement section 111 measures the instantaneous power values of known signals received via reception section 110, whilst downlink average signal power calculation section 1201 averages the instantaneous power values measured for a set time period.

Downlink signal power variations counting section 1202 counts the number of times of variations in the instantaneous power values by comparing a reference value, which is set by adding a certain arbitrary value to the averaged value which is subjected to averaging at downlink average signal power calculation section 1201, with each of the instantaneous power values measured at instantaneous power measurement section 111. When counting the variations in the instantaneous power values, count is incremented each time when a certain instantaneous power value exceeds the reference value and then the next instantaneous power value falls short of the reference value or when a certain instantaneous power value falls short of the reference value and then the next instantaneous power value exceeds the reference value.

Downlink filter coefficient determination section 302 determines a filter coefficient based on the counter value which is counted at downlink signal power variations counting section 1202. When determining the filter coefficient, it is judged that the power variation values of the known signals are fluctuating heavily and so greater fading effects are expected in a case where the counter value is high in number, and in such a case, the determination is made in such a way that a long time period is taken for averaging at averaging section 113 in the communication terminal apparatus. On the other hand, it is judged that the power variation values of the known signals are running in a stable manner and so lesser fading effects are expected in a case where the counter value is low in number, and in such a case, the determination is made in such a way that a short time period is taken for averaging at averaging section 113 in the communication terminal apparatus.

As described above, according to Embodiment 11, it is possible for a communication terminal apparatus to judge the power valuation value based on known signals received by the communication terminal apparatus from a base station apparatus, and so it is further possible to increase the reliability of reported wireless quality and to ensure that a transmission scheme determined based on the reported value is the best one by controlling a time period for averaging in such a way that a short time period is taken for averaging the instantaneous power values of the known signals in a case where the power variation value thereof is low in number whilst a long time period is taken for averaging the instantaneous power values of the known signals in a case where the power variation value thereof is high in number.

### (Embodiment 12)

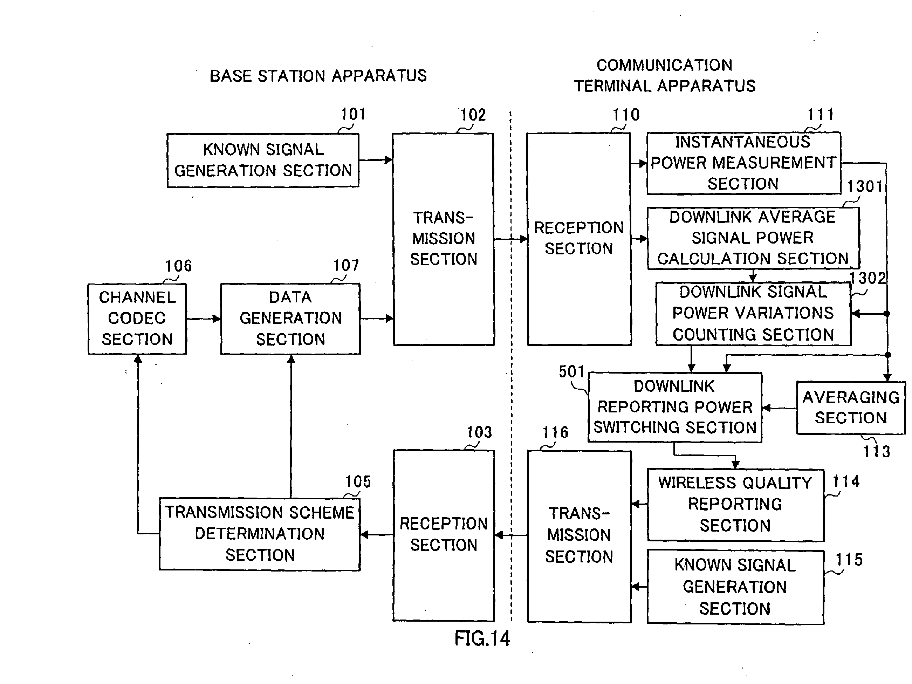

FIG. 14 is a block diagram illustrating the configuration of a wireless communication system according to Embodiment 12 of the present invention. In FIG. 14, the same reference numeral is assigned to any constituent element which is the same as or equivalent to a constituent element illustrated in FIG. 6, and its detailed description is omitted. Here, a description will focus on the part which is particularly related to this Embodiment 12.

As illustrated in FIG. 14, in this Embodiment 12, a system is provided with downlink average signal power calculation section 1301 and downlink signal power variations counting section 1302 in place of downlink Doppler shift estimation section 301 which is illustrated in FIG. 6.

In a communication terminal apparatus, downlink average signal power calculation section 1301 averages instantaneous power values measured for a set time period whilst downlink signal power variations counting section 1302 counts the number of times of variations in the instantaneous power values.

Here, the operation of a wireless communication system having the above-described configuration is described with reference to FIG. 14. First of all, in a communication terminal apparatus, instantaneous power measurement section 111 measures the instantaneous power values of known signals received via reception section 110, whilst downlink average signal power calculation section 1301 averages the instantaneous power values measured for a set time period.

Downlink signal power variations counting section 1302 counts the number of times of variations in the instantaneous power values by comparing a reference value, which is set by adding a certain arbitrary value to the averaged value which is subjected to averaging at downlink average signal power calculation section 1301, with each of the instantaneous power values measured at instantaneous power measurement section 111. When counting the variations in the instantaneous power values, count is incremented each time when a certain instantaneous power value exceeds the reference value and then the next instantaneous power value falls short of the reference value or when a certain instantaneous power value falls short of the reference value and then the next instantaneous power value exceeds the reference value.

Downlink reporting power switching section 501 selects an item to be reported based on the counter value which is counted at downlink signal power variations counting section 1302. When selecting an item to be reported, it is judged that the power variation values of the known signals are fluctuating heavily and so greater fading effects are expected in a case where the counter value is high in number, and in such a case, a wireless quality value which is to be reported should be based on the averaged power value of the known signals. On the other hand, it is judged that the power variation values of the known signals are running in a stable manner and so lesser fading effects are expected in a case where the counter value is low in number, and in such a case, a wireless quality value which is to be reported should be based on the instantaneous power values of the known signals.

As described above, according to Embodiment 12, it is possible for a communication terminal apparatus to judge the power variation value based on known signals received by the communication terminal apparatus from a base station apparatus, and so it is further possible to ensure that a transmission scheme determined based on the reported value which is received by the base station apparatus from the communication terminal apparatus is the best one by performing a control in such a way that the wireless quality value based on the instantaneous power values is reported in a case where the power variation value is low in number whilst the wireless quality value based on the averaged power values is reported in a case where the power variation value is high in number.

As made clear from the above descriptions, according to the present invention, by judging the conditions of a propagation path of a communication terminal apparatus (a moving speed, a power variation value, and so on) based on signals received by a base station apparatus from a communication terminal apparatus or on signals received by a communication terminal apparatus from a base station apparatus, and further by controlling a power averaging time period in the communication terminal apparatus or by selecting an item to be reported based on the judgment, it is possible to increase the reliability of a wireless quality value which is reported to the base station apparatus, thereby ensuring that an optimum transmission scheme is determined based on the reported value.

This specification is based on the Japanese Patent Application No. 2001-394810 filed on December 26, 2001, entire content of which is expressly incorporated by reference herein.

### INDUSTRIAL APPLICABILITY

The present invention is suitably applicable to a base station apparatus and a communication terminal apparatus in a wireless communication system.

## Claims

1. A communication terminal apparatus comprising:
an instantaneous power measurement section that measures an instantaneous power value of a reception signal;
an averaging section that takes a longer averaging time period in accordance with a greater degree in change in a propagation path, and generates an averaged power value, which is an averaged value of the instantaneous power values, and a noise power value; and
a wireless quality reporting section that generates a control signal indicating wireless quality derived from the averaged power value and the noise power value to report the generated information to a base station apparatus.

2. A communication terminal apparatus comprising:
an instantaneous power measurement section that measures an instantaneous power value of a reception signal;
an averaging section that takes an averaging time period having a length in accordance with a degree in change in a propagation path, and generates an averaged power value, which is an averaged value of the instantaneous power values, and a noise power value;
a reporting power switching section that selects either the instantaneous power values or the averaged power value; and
a power reporting section that generates a control signal indicating wireless quality derived from the power value selected at said reporting power switching section and the noise power value to report the generated information to a base station apparatus.

3. The communication terminal apparatus according to claim 2, wherein said reporting power switching section selects the averaged power value in a case where the degree in change in the propagation path is greater than a predetermined threshold value.

4. The communication terminal apparatus according to claim 1, further comprising:
a Doppler shift amount estimation section that estimates an amount of Doppler shift from the reception signal;
wherein said averaging section judges the conditions of the propagation path based on the Doppler shift amount.

5. The communication terminal apparatus according to claim 1, further comprising:
a moving speed calculation section that calculates the moving speed of the apparatus itself from the reception signal;
wherein said averaging section judges the conditions of the propagation path based on the moving speed.

6. The communication terminal apparatus according to claim 1, further comprising:
a power variations counting section that counts power variations in the reception signal;
wherein said averaging section judges the conditions of the propagation path based on the counted number of times.

7. The communication terminal apparatus according to claim 1, further comprising:
a control information extraction section that extracts control information indicating a filter coefficient or indicating an item to be reported from the reception signal;
wherein said averaging section judges the conditions of the propagation path based on the control information.

8. A base station apparatus comprising:
a control information determination section that determines control information indicating a filter coefficient or indicating an item to be reported in accordance with the conditions of the propagation path; and
a transmission section that transmits the control information to the communication terminal apparatus according to claim 7.

9. The base station apparatus according to claim 8, further comprising:
a Doppler shift amount estimation section that estimates an amount of Doppler shift from a reception signal;
wherein said control information determination section judges the conditions of the propagation path based on the Doppler shift amount.

10. The base station apparatus according to claim 8, further comprising:
a moving speed calculation section that calculates the moving speed of the communication terminal apparatus, which is the other communicating party, from the reception signal;
wherein said control information determination section judges the conditions of the propagation path based on the moving speed.

11. The base station apparatus according to claim 8, further comprising:
a power variations counting section that counts power variations in the reception signal;
wherein said control information determination section judges the conditions of the propagation path based on the counted number of times.

12. The base station apparatus according to claim 8, further comprising:
a transmission scheme determination section that determines a transmission scheme based on the control information indicating the wireless quality received from the communication terminal apparatus according to claim 1.

13. A wireless communication method comprising the steps of:
a communication terminal apparatus averaging an instantaneous power value for a time period in accordance with the conditions of a propagation path to generate an averaged power value and transmitting control information indicating wireless quality based on the averaged power value to a base station apparatus; and
the base station apparatus determining a transmission scheme based on the received control information indicating the wireless quality value.

14. A wireless communication method comprising the steps of:
a base station apparatus determining a filter coefficient or an item to be used for reporting wireless quality and transmitting control information indicating the determined filter coefficient or the determined item to a communication terminal;
the communication terminal apparatus judging the conditions of a propagation path based on the control information, generating an averaged power value by averaging an instantaneous power value for a time period in accordance with the conditions of the propagation path, and transmitting the control information indicating a wireless quality value to the base station apparatus; and
the base station apparatus determining a transmission scheme based on the received control information.
